# EUROPÄISCHE PATENTANMELDUNG

(11) **EP 3 739 711 A1**
(43) Veröffentlichungstag der Anmeldung: **18.11.2020**
(21) Anmeldenummer: 19174037.2
(22) Anmeldetag: 13.05.2019
(51) Int. Cl.: H02J 3/24, H02J 3/46

(54) **MEHRKANAL-PRL: VERFAHREN UND SYSTEM ZUM ERBRINGEN EINER REGELLEISTUNG ZUM REGELN EINER NETZFREQUENZ EINES STROMNETZES SOWIE STROMNETZ**

(71) Anmelder: TRIMET Aluminium SE, 45356 Essen (DE)
(72) Erfinder: Hauck, Heribert, 47800 Krefeld (DE)
(74) Vertreter: Hoffmann Eitle

(57) **Zusammenfassung**

Die vorliegende Anmeldung betrifft ein System und ein Verfahren zum Erbringen einer Regelleistung zum Regeln einer Netzfrequenz eines mit einer Nominal-Netzfrequenz betriebenen Stromnetzes bei einer Frequenzabweichung der Netzfrequenz von der Nominal-Netzfrequenz. Ein zeitlicher Verlauf der Frequenzabweichung wird spektral in zumindest zwei verschiedene Spektralbereiche aufgeteilt, wobei jeder der Spektralbereiche jeweils einer von zumindest zwei verschiedenen technischen Einheiten zum Bereitstellen von Regelleistung zugeordnet ist. Dann wird die erforderliche Regelleistung entsprechend der spektralen Aufteilung des zeitlichen Verlaufs der Frequenzabweichung einzeln oder gemeinsam durch die technischen Einheiten erbracht, wobei ein jeweiliger Leistungsanteil der technischen Einheiten an der Regelleistung dem Spektralanteil desjenigen Spektralbereichs am zeitlichen Verlauf der Frequenzabweichung entspricht, welcher der jeweiligen technischen Einheit zugeordnet ist.

## Beschreibung

### TECHNISCHES GEBIET

Die vorliegende Erfindung betrifft ein Verfahren zum Erbringen einer Regelleistung zum Regeln einer Netzfrequenz eines mit einer Nominal-Netzfrequenz betriebenen Stromnetzes bei einer Frequenzabweichung der Netzfrequenz von der Nominal-Netzfrequenz.

Ferner betrifft die vorliegende Erfindung ein System zum Erbringen einer Regelleistung zum Regeln einer Netzfrequenz eines mit einer Nominal-Netzfrequenz betriebenen Stromnetzes bei einer Frequenzabweichung der Netzfrequenz von der Nominal-Netzfrequenz, wobei das System zumindest zwei verschiedene technische Einheiten zum Bereitstellen von Regelleistung umfasst.

Schließlich betrifft die vorliegende Erfindung ein Stromnetz mit einer Nominal-Netzfrequenz und einer hiervon um eine Frequenzabweichung abweichenden Netzfrequenz.

### HINTERGRUND

Die Regelleistung, die auch als "Reserveleistung" bezeichnet wird, gewährleistet die Versorgung von privaten und industriellen Stromverbrauchern mit genau der benötigten elektrischen Leistung trotz erheblicher Leistungsbedarfs- und Leistungsangebots-Schwankungen im Stromnetz. Dazu können kurzfristig Leistungsanpassungen bei regelfähigen Kraftwerken durchgeführt werden, schnell anlaufende Kraftwerke (z. B. Gasturbinenkraftwerke) gestartet oder Pumpspeicherkraftwerke eingesetzt werden. Zudem können insbesondere industrielle Stromverbraucher mit Laststeuerung ihre Leistungsentnahme aus dem Netz reduzieren oder vollständig unterbrechen.

Die Regelleistung gleicht somit Differenzen zwischen Einspeisung und Ausspeisung von Leistung in das bzw. aus dem Stromnetz aus. Dabei wird die benötigte Regelleistung anhand der im gesamten Stromnetz einheitlichen Netzfrequenz bestimmt. Das Stromnetz arbeitet auf der Grundlage einer Nominal-Netzfrequenz, in Europa beispielsweise 50 Hz, die den Sollwert der Netzfrequenz darstellt. Wenn mehr Leistung in das Stromnetz eingespeist als entnommen wird, erhöht sich die Netzfrequenz, da das Stromnetz keine Energie speichern kann. Im umgekehrten Fall, also bei mehr Ausspeisung bzw. Leistungsentnahme, als eingespeist wird, verringert sich die Netzfrequenz. Die Differenz zwischen der tatsächlichen Netzfrequenz und der Nominal-Netzfrequenz wird im vorliegenden Zusammenhang als Frequenzabweichung bezeichnet.

Die Netzbetreiber beschaffen vor diesem Hintergrund im Rahmen ihrer Verpflichtung zum sicheren Betrieb des Übertragungsnetzes verschiedene Regelleistungsprodukte. Das anspruchsvollste dieser Produkte ist die sogenannte Primärregelleistung (engl.: frequency containment reserve, FCR). Dieses Regelenergieprodukt stellt sicher, dass die Netzfrequenz kontinuierlich innerhalb bestimmter zulässiger Grenzen gehalten wird.

In Europa beispielsweise muss die Primärregelleistung bei Frequenzabweichungen von bis zu 200 mHz von der Nominal-Netzfrequenz von 50,0 Hz nach oben oder unten, d.h. bei Frequenzen von zwischen 49,8 Hz und 50,2 Hz, innerhalb von 30 Sekunden erbracht werden. Dabei werden lediglich sehr kleine Abweichungen von weniger als 10 mHz, d.h. wenn die Netzfrequenz zwischen 49,99 Hz und 50,01 Hz liegt, unter Umständen nicht ausgeregelt.

Ein Problem beim Erbringen von Primärregelleistung ist die relativ hohe Geschwindigkeit, mit der sich die Netzfrequenz gegenüber der Nominal-Netzfrequenz ändert. Jeder Änderung der Frequenzabweichung zu folgen stellt sehr hohe Anforderungen an die zum Erbringen der Regelleistung vorgesehenen technischen Einheiten. Insbesondere industrielle Stromverbraucher haben massive Effizienzeinbrüche zu verzeichnen, wenn sie ihre verfahrenstechnischen Prozesse mit der hohen Änderungsgeschwindigkeit der Netzfrequenz anpassen müssen.

Daher ist es für eine einzelne technische Einheit (z.B. ein Kraftwerk oder einen verfahrenstechnischen Prozess eines industriellen Stromverbrauchers wie einer Industrieanlage) oftmals schwierig und wirtschaftlich unattraktiv, die Primärregelleistung alleine anforderungskonform zu liefern.

Um die hohen Änderungsgeschwindigkeiten abzufedern, gibt es Konzepte zur Lieferung sogenannter synthetischer Primärregelleistung. Das bekannteste Verfahren ist die Aufteilung des Regelbandes von beispielsweise +/-200 mHz in mehrere Teilbänder, z.B. ein symmetrisches Kernband von +/-100 mHz, d.h. 49,9 Hz bis 50,1 Hz, und zwei Seitenbänder von jeweils +/- (100-200) mHz, d.h. 49,8 Hz bis 49,9 Hz und 50,1 Hz bis 50,2 Hz, die von unterschiedlichen Anbietern bedient und von einem Aggregator zu dem angeforderten Gesamtprodukt "synthetisiert" werden. Solche Produkte werden daher auch als "synthetische PRL" oder im Englischen "synthetic FCR" bezeichnet. Ein System und Verfahren für eine solche synthetische Primärregelleistung ist beispielsweise in EP 3 136 532 A1 beschrieben. Es macht sich die Überlegung zunutze, dass ein großer Teil der Regelleistung im Kernband erfolgt, während große Regelleistungen in den Seitenbändern seltener nachgefragt werden, was die hierfür zuständigen technischen Einheiten mit großer Energieverschiebekapazität bzw. Speicherkapazität entlastet.

Aber auch in den Seitenbändern, d.h. bei weiter von der Nominal-Netzfrequenz entfernt liegenden Netzfrequenzen findet die Änderung der Frequenzabweichung bei einer hohen Geschwindigkeit statt. Somit kommen die für die Seitenbänder zuständigen technischen Einheiten zwar bei dem aus dem Stand der Technik bekannten Verfahren seltener zum Einsatz, aber im Einsatzfall leidet ihre Effizienz wieder sehr unter der hohen Änderungsrate ihrer Leistungsentnahme aus dem Stromnetz.

Somit besteht weiterhin das Problem der relativ hohen Geschwindigkeit, mit der sich die Netzfrequenz gegenüber der Nominal-Netzfrequenz ändert, und der hiermit verbundenen massiven Effizienzeinbrüche, wenn industrielle Stromverbraucher ihre verfahrenstechnischen Prozesse mit der hohen Änderungsgeschwindigkeit der Netzfrequenz anpassen müssen, um zur Primärregelleistung beizutragen.

### DARSTELLUNG DER ERFINDUNG

Vor diesem Hintergrund besteht eine Aufgabe der vorliegenden Erfindung darin, ein Verfahren und ein System zum Erbringen einer Regelleistung des obigen technischen Gebiets bereitzustellen, womit es effizienter möglich ist, einen industriellen Stromverbraucher zur Frequenzregelung eines Stromnetzes, insbesondere zur Primärregelung, einzusetzen.

Diese Aufgabe wird durch ein Verfahren nach Anspruch 1 und ein System nach Anspruch 5 gelöst. Vorteilhafte Ausgestaltungen der Erfindung ergeben sich aus den Unteransprüchen.

Das Verfahren zum Erbringen einer Regelleistung zum Regeln einer Netzfrequenz eines mit einer Nominal-Netzfrequenz betriebenen Stromnetzes bei einer Frequenzabweichung der Netzfrequenz von der Nominal-Netzfrequenz ist dadurch gekennzeichnet, dass ein zeitlicher Verlauf der Frequenzabweichung spektral in zumindest zwei verschiedene Spektralbereiche aufgeteilt wird, wobei jeder der Spektralbereiche jeweils einer von zumindest zwei verschiedenen technischen Einheiten zum Bereitstellen von Regelleistung zugeordnet ist. Die erforderliche Regelleistung wird entsprechend der spektralen Aufteilung des zeitlichen Verlaufs der Frequenzabweichung einzeln oder gemeinsam durch die technischen Einheiten erbracht, wobei ein jeweiliger Leistungsanteil der technischen Einheiten an der Regelleistung dem Spektralanteil desjenigen Spektralbereichs am zeitlichen Verlauf der Frequenzabweichung entspricht, welcher der jeweiligen technischen Einheit zugeordnet ist.

Mit anderen Worten wird die Geschwindigkeit, mit der sich die Frequenzabweichung ändert, also zu- oder abnimmt, dazu verwendet, eine hierzu passende technische Einheit zum Erbringen einer entsprechenden Regelleistung auszuwählen, so dass die Regelung effizient durchgeführt werden kann. Konkret wird die Frequenzabweichung auf diese Weise in einen sich langsam ändernden Anteil und einen sich schnell ändernden Anteil aufgeteilt. Der sich langsam ändernde Anteil hat eine gegenüber dem sich schnell ändernden Anteil größere Amplitude, d.h. benötigt mehr Regelleistung, um ausgeregelt zu werden, während der sich schnell ändernde Anteil eine kleinere Amplitude als der sich langsam ändernde Anteil hat, also durch eine kleinere Regelleistung ausgeregelt werden kann.

Die erfindungsgemäße Aufteilung der Regelleistung entsprechend der spektralen Aufteilung des zeitlichen Verlaufs der Frequenzabweichung ermöglicht es, zum Erbringen von sich schnell ändernden Regelleistungen gezielt schnelle technische Einheiten auszuwählen, die nur eine gegenüber den großen verfahrenstechnischen Prozessen kleine Energieverschiebe-Kapazität oder Speicher-Kapazität haben müssen. Hierzu können beispielsweise Superkondensatoren (Supercaps), Schwungradspeicher oder auch Batterien gehören. Eine vorteilhafte Konsequenz ist, dass der leistungsintensive Anteil der Frequenzabweichung durch eine trägere technische Einheit, z.B. einen sich nur langsam ändernden verfahrenstechnischen Prozess einer Industrieanlage, ein Kraftwerk oder dergleichen, ausgeregelt werden kann. Wegen der Abtrennung des sich schnell ändernden Anteils an der Regelleistung kann die Geschwindigkeit, mit der sich der von der trägeren technischen Einheit erbrachte Leistungsanteil ändert, niedriger als im Stand der Technik gehalten werden. Damit kann die Regelleistung insgesamt effizienter als im Stand der Technik erbracht werden, weil die trägere technische Einheit nicht jeder Änderung der Frequenzabweichung zu folgen braucht, nachdem die sich schnell ändernde Frequenzabweichung durch die schnellere technische Einheit ausgeregelt oder zumindest abgefedert wird. Die Summe aus der schnelleren technischen Einheit und der trägeren technischen Einheit stellt die geforderte Regelleistung also insgesamt effizienter zur Verfügung, auch wenn die Frequenzabweichung extreme Werte annimmt, also beispielsweise mehr als 100 mHz beträgt.

Bevorzugt wird der zeitliche Verlauf der Frequenzabweichung in einen Hochpass-Anteil und einen Residual-Anteil oder in einen Tiefpass-Anteil und einen Residual-Anteil oder in einen Hochpass-Anteil und einen Tiefpass-Anteil aufgeteilt.

Es kann also zum spektralen Aufteilen des zeitlichen Verlaufs der Frequenzabweichung ein analoger oder digitaler Hochpass-Filter hohe Änderungsgeschwindigkeiten (Hochpass-Anteil) ausfiltern und einen dementsprechenden Leistungsanteil der Regelleistung einer vergleichsweise schnellen technischen Einheit zuordnen, während ein dem Rest der Frequenzabweichung (dem Residual-Anteil) entsprechender Leistungsanteil der Regelleistung einer trägen technischen Einheit zugeordnet wird.

Analog kann zum spektralen Aufteilen des zeitlichen Verlaufs der Frequenzabweichung ein analoger oder digitaler Tiefpass-Filter niedrige Änderungsgeschwindigkeiten (Tiefpass-Anteil) ausfiltern und einen dementsprechenden Leistungsanteil der Regelleistung einer vergleichsweise trägen technischen Einheit zuordnen, während ein dem Rest der Frequenzabweichung (dem Residual-Anteil) entsprechender Leistungsanteil der Regelleistung einer schnellen technischen Einheit zugeordnet wird.

Ebenso kann zum spektralen Aufteilen des zeitlichen Verlaufs der Frequenzabweichung ein analoger oder digitaler Hochpass-Filter hohe Änderungsgeschwindigkeiten (Hochpass-Anteil) ausfiltern und einen dementsprechenden Leistungsanteil der Regelleistung einer vergleichsweise schnellen technischen Einheit zuordnen, während ein analoger oder digitaler Tiefpass-Filter niedrige Änderungsgeschwindigkeiten (Tiefpass-Anteil) ausfiltern kann und einen dementsprechenden Leistungsanteil der Regelleistung einer trägen technischen Einheit zuordnen kann. Ein dem ggf. vorhandenen Rest der Frequenzabweichung (dem Residual-Anteil) entsprechender Leistungsanteil der Regelleistung kann dann einer weiteren technischen Einheit zugeordnet werden, die hinsichtlich ihrer Geschwindigkeit zwischen der schnellen und der trägen technischen Einheit eingeordnet werden kann und ggf. auch eine zwischen diesen technischen Einheiten einzuordnende Energieverschiebekapazität oder Speicherkapazität haben kann, aber nicht muss.

Die ermittelten Werte des zeitlichen Verlaufs der Frequenzabweichung können dann beispielsweise über einen Algorithmus oder über frequenzabhängige Schaltungen (auch im Sinne von Ersatzschaltungen) als über oder unter einem Schwellenwert liegend bewertet und entsprechend einem Spektralbereich oberhalb des Schwellenwerts oder einem Spektralbereich unterhalb des Schwellenwerts zugeordnet werden.

Von den zumindest zwei technischen Einheiten weist eine einem ersten Spektralbereich zugeordnete erste technische Einheit eine erste Reaktionsgeschwindigkeit und eine erste Energieverschiebekapazität oder Speicherkapazität auf, während eine einem zweiten Spektralbereich zugeordnete zweite technische Einheit eine zweite Reaktionsgeschwindigkeit und eine zweite Energieverschiebekapazität oder Speicherkapazität aufweist. Dabei deckt der erste Spektralbereich eine langsamere Frequenzabweichung als der zweite Spektralbereich ab und die erste technische Einheit weist eine geringere Reaktionsgeschwindigkeit und eine höhere Energieverschiebekapazität oder Speicherkapazität als die zweite technische Einheit auf.

Es ist alternativ auch möglich, dass die zweite technische Einheit eine höhere Reaktionsgeschwindigkeit und gleichzeitig eine höhere Energieverschiebekapazität oder Speicherkapazität als die erste technische Einheit aufweist. Mit der bevorzugten Ausführungsform wird das Verfahren zum Erbringen der Regelleistung besonders effizient, weil Kosten für eine hohe Energieverschiebekapazität oder Speicherkapazität der zweiten technischen Einheit nicht im gleichen Maße anfallen wie in der alternativ genannten Ausführungsform.

Bevorzugt wird die Regelleistung zur Primärregelung des Stromnetzes erbracht. Dies bedeutet, dass die Regelleistung schnell, beispielsweise innerhalb von 30 Sekunden, vollständig zur Verfügung stehen können muss und dazu vorgesehen ist, eine erste Frequenzabweichung von beispielsweise bis zu 200 mHz, ggf. erst außerhalb eines Unempfindlichkeitsbereichs oder Totbands von beispielsweise 10 mHz, um die Nominal-Netzfrequenz von beispielsweise 50 Hz auszuregeln.

Das Verfahren einer besonders bevorzugten Ausführungsform besteht im Grundsatz darin, dass ein der Regelung als Sollwert zugrunde liegende Frequenzabweichungssignal mittels einer spektralen Aufteilung seines zeitlichen Verlaufs in mindestens einen Hochpass- und einen Tiefpass-/ bzw. Residual-Anteil aufgeteilt wird, ähnlich einer Frequenzweiche einer Zweiwege- oder Mehrwege-Lautsprecherbox, wobei die aufgeteilten Frequenzanteile von unterschiedlichen technischen Einheiten als Sollwert zur Bildung eines jeweiligen Regelenergie-Anteils verarbeitet werden. Die Summe der beiden oder mehreren Regelenergiebeiträge kann dann die vom Netzbetreiber angeforderte vollwertige Regelleistung, insbesondere Primärregelleistung, sein.

Das System zum Erbringen einer Regelleistung zum Regeln einer Netzfrequenz eines mit einer Nominal-Netzfrequenz betriebenen Stromnetzes bei einer Frequenzabweichung der Netzfrequenz von der Nominal-Netzfrequenz, das zumindest zwei verschiedene technische Einheiten zum Bereitstellen von Regelleistung umfasst, ist dadurch gekennzeichnet, dass das System eine Steuerung umfasst, die dazu ausgestaltet ist, die technischen Einheiten auf der Grundlage einer spektralen Aufteilung eines zeitlichen Verlaufs der Frequenzabweichung in zumindest zwei verschiedene Spektralbereiche zum Bereitstellen eines jeweiligen Leistungsanteils der Regelleistung derart anzusteuern, dass sich die Leistungsanteile der technischen Einheiten zur Regelleistung ergänzen. Die Steuerung umfasst vorzugsweise ein Prozessor, der so angepasst ist, dass die technischen Einheiten auf der Grundlage der spektralen Aufteilung des zeitlichen Verlaufs der Frequenzabweichung in die zumindest zwei verschiedenen Spektralbereiche zum Bereitstellen des jeweiligen Leistungsanteils der Regelleistung derart angesteuert werden, dass sich die Leistungsanteile der technischen Einheiten zur Regelleistung ergänzen.

Vorzugsweise ist die Steuerung bzw. der Prozessor dazu ausgestaltet, das oben beschriebene Verfahren in einer Ausführungsform durchzuführen. Alternativ kann die Steuerung aber auch andere Verfahrensschritte durchführen, um die technischen Einheiten entsprechend anzusteuern. Beispielsweise ist es nicht unbedingt erforderlich, dass die Steuerung selbst den zeitlichen Verlauf der Frequenzabweichung spektral aufteilt, sondern ein entsprechend vorbereitetes Signal kann auch an anderer Stelle erzeugt werden.

Bevorzugt handelt es sich bei der ersten technischen Einheit um einen verfahrenstechnischen Prozess einer Industrieanlage wie beispielsweise einen Aluminiumelektrolyseprozess. Sie kann auch ein Kraftwerk oder ein anderes an das Stromnetz angeschlossenes Element sein, das in seiner zeitlichen Dynamik vergleichsweise langsam ist und vorzugsweise eine verhältnismäßig hohe Energieverschiebekapazität oder Speicherkapazität hat. Die zweite technische Einheit kann vorzugsweise ein Superkondensator, Schwungradspeicher oder eine Batterie sein, wobei auch ein anderes an das Stromnetz angeschlossenes Element sein, das in seiner zeitlichen Dynamik schnell ist und vorzugsweise eine verhältnismäßig niedrige Energieverschiebekapazität oder Speicherkapazität hat. Diese technischen Einheiten ermöglichen eine besonders effiziente Regelung der Netzfrequenz.

Ein Stromnetz mit einer Nominal-Netzfrequenz und einer hiervon um eine Frequenzabweichung abweichenden Netzfrequenz ist dadurch gekennzeichnet, dass es mit einem oben genannten System wirkverbunden ist.

Weitere Vorteile und Weiterbildungen der Erfindung ergeben sich aus der nachfolgenden Figurenbeschreibung und der Gesamtheit der Ansprüche.

### KURZE FIGURENBESCHREIBUNG

- Fig. 1: zeigt ein Blockschaltbild eines Systems gemäß einer ersten bevorzugten Ausführungsform.
- Fig. 2: zeigt ein Blockschaltbild eines Systems gemäß einer zweiten bevorzugten Ausführungsform.
- Fig. 3: zeigt einen beispielhaften zeitlichen Verlauf einer Netzfrequenz.
- Fig. 4: zeigt einen beispielhaften zeitlichen Verlauf einer Frequenzabweichung.
- Fig. 5: zeigt einen hochfrequenten Spektralbereich des beispielhaften zeitlichen Verlaufs der Frequenzabweichung aus Fig. 4.
- Fig. 6: zeigt einen niederfrequenten Spektralbereich des beispielhaften zeitlichen Verlaufs der Frequenzabweichung aus Fig. 4.

### WEGE ZUR AUSFÜHRUNG DER ERFINDUNG

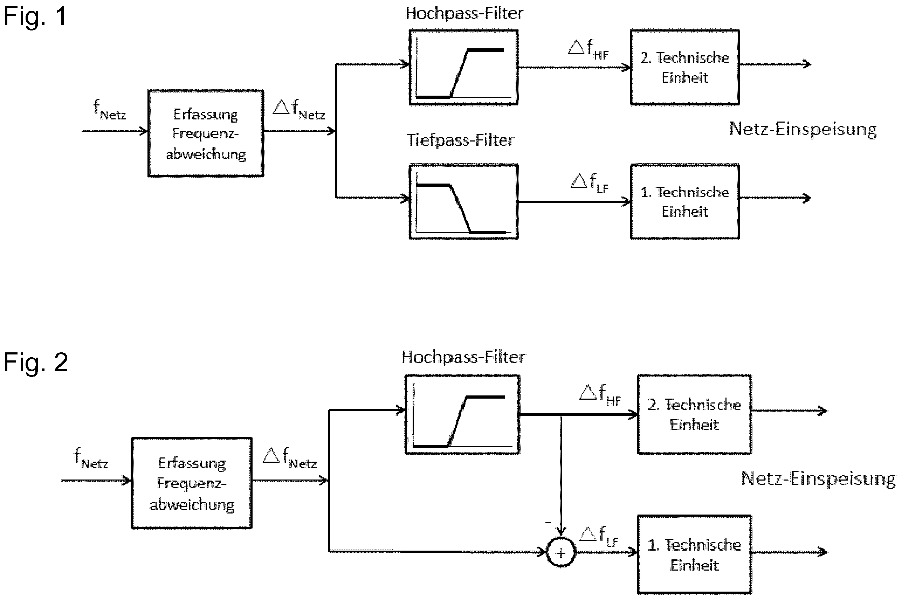

Fig. 1 zeigt ein Blockschaltbild eines Systems gemäß einer ersten bevorzugten Ausführungsform. Bei dem in Fig. 1 gezeigten System wird die Netzfrequenz f_{Netz} eines mit einer Nominal-Netzfrequenz betriebenen Stromnetzes eingespeist und dadurch eine Frequenzabweichung Δf_{Netz} kontinuierlich erfasst. Somit kann der zeitliche Verlauf der Frequenzabweichung Δf_{Netz} ermittelt werden.

Mittels einer Anordnung aus einem Hochpass-Filter und einem Tiefpass-Filter, die mit der kontinuierlich erfassten Frequenzabweichung Δf_{Netz} gespeist wird, kann die Frequenzabweichung Δf_{Netz} spektral in zwei verschiedene Spektralbereiche aufgeteilt werden. So wird durch den Hochpass-Filter ein hochfrequenter Spektralbereich Δf_{HF} des zeitlichen Verlaufs der Frequenzabweichung Δf_{Netz} erzeugt, während durch den Tiefpass-Filter ein niederfrequenter Spektralbereich Δf_{LF} des zeitlichen Verlaufs der Frequenzabweichung Δf_{Netz} erzeugt wird.

Der Hochpass-Filter und der Tiefpass-Filter in der hier dargestellten Ausführungsform sind so ausgestaltet, dass sie nahtlos aneinander anschließen und sich somit zur Frequenzabweichung Δf_{Netz} ergänzen. Alternativ zu der in Fig. 1 gezeigten Ausführungsform können auch ein oder mehrere weitere Filter vorgesehen sein, um die Frequenzabweichung Δf_{Netz} in noch mehr Spektralbereiche aufzuteilen.

Der hochfrequente Spektralbereich Δf_{HF} des zeitlichen Verlaufs der Frequenzabweichung Δf_{Netz} wird von dem Hochpass-Filter in eine zweite technische Einheit eingespeist, die somit dem hochfrequenten Spektralbereich Δf_{HF} zugeordnet ist, damit diese zweite technische Einheit einen dem hochfrequenten Spektralbereich Δf_{HF} entsprechenden Leistungsanteil an einer insgesamt von dem System erbrachten Regelleistung erbringt. Die zweite technische Einheit ist dabei vorzugsweise so ausgewählt, dass sie eine hohe Reaktionsgeschwindigkeit aufweist, um dem hochfrequenten spektralen Anteil der Frequenzabweichung Δf_{Netz} folgend ihren Leistungsanteil an der Gesamt-Regelleistung gut und effizient erbringen zu können. Beispielsweise kann es sich bei der zweiten technischen Einheit um einen Superkondensator, einen Schwungradspeicher oder eine Batterie handeln.

Analog wird der niederfrequente Spektralbereich Δf_{LF} des zeitlichen Verlaufs der Frequenzabweichung Δf_{Netz} von dem Tiefpass-Filter in eine erste technische Einheit eingespeist, die somit dem niederfrequenten Spektralbereich Δf_{LF} zugeordnet ist, damit diese erste technische Einheit einen dem niederfrequenten Spektralbereich Δf_{LF} entsprechenden Leistungsanteil an der insgesamt von dem System erbrachten Regelleistung erbringt. Die erste technische Einheit ist dabei vorzugsweise so ausgewählt, dass sie eine hohe Energieverschiebekapazität oder Speicherkapazität aufweist, um den in den nachfolgenden Diagrammen abgebildeten hohen Amplituden des niederfrequenten spektralen Anteils der Frequenzabweichung Δf_{Netz} folgend ihren Leistungsanteil an der Gesamt-Regelleistung gut und effizient erbringen zu können. Beispielsweise kann es sich bei der ersten technischen Einheit um einen verfahrenstechnischen Prozess wie einen Aluminiumelektrolyseprozess oder ein Kraftwerk handeln.

Die Leistungsanteile der ersten und zweiten technischen Einheit werden zusammen in das Stromnetz als Regelleistung, bevorzugt als Primärregelleistung, eingespeist, um die Netzfrequenz möglichst nah an der Nominal-Netzfrequenz des Stromnetzes zu halten.

Fig. 2 zeigt ein Blockschaltbild eines Systems gemäß einer zweiten bevorzugten Ausführungsform. Der grundsätzliche Aufbau des Systems gemäß der zweiten bevorzugten Ausführungsform ist ähnlich demjenigen der ersten bevorzugten Ausführungsform und wiederholende Beschreibungen werden ausgelassen.

Im Unterschied zur ersten bevorzugten Ausführungsform aus Fig. 1 beinhaltet das System gemäß Fig. 2 keinen Tiefpass-Filter, sondern nur einen Hochpass-Filter. Wie in der ersten bevorzugten Ausführungsform wird durch den Hochpass-Filter der hochfrequente Spektralbereich Δf_{HF} des zeitlichen Verlaufs der Frequenzabweichung Δf_{Netz} erzeugt. Um die Gesamt-Regelleistung erbringen zu können, wird zusätzlich zum hochfrequenten Spektralbereich Δf_{HF} des zeitlichen Verlaufs der Frequenzabweichung Δf_{Netz} ein Residual-Anteil des zeitlichen Verlaufs der Frequenzabweichung Δf_{Netz} ermittelt, indem der hochfrequente Spektralbereich Δf_{HF} von der Frequenzabweichung Δf_{Netz} subtrahiert wird. Der somit verbleibende Residual-Anteil entspricht genau dem in der ersten bevorzugten Ausführungsform durch den Tiefpass-Filter ermittelten niederfrequenten Spektralbereich Δf_{LF}, erfordert aber nicht den Einsatz eines Tiefpass-Filters.

Das umgekehrte Vorgehen ist ebenfalls möglich, wonach auf den Hochpass-Filter der in Fig. 1 gezeigten Ausführungsform verzichtet und der hochfrequente Spektralbereich Δf_{HF} des zeitlichen Verlaufs der Frequenzabweichung Δf_{Netz} ermittelt wird, indem der niederfrequente Spektralbereich Δf_{LF} von der Frequenzabweichung Δf_{Netz} subtrahiert wird.

Die Blockschaltbilder aus Fig. 1 und 2 sind Ersatzschaltbilder, welche mittels herkömmlicher Schaltelemente verdeutlichen sollen, wie ein System zum Erbringen von Regelleistung aufgebaut sein kann. In der heutigen Praxis werden die Hochpass-Filter und Tiefpass-Filter häufig durch digitale Elemente dargestellt. Letztlich genügt es, die spektrale Aufteilung zu bewirken, was mit heutigen Computern gut möglich ist.

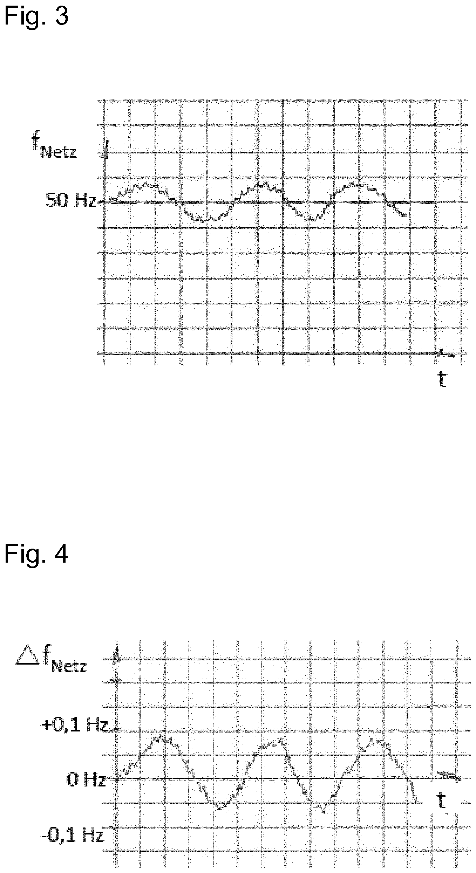

Fig. 3 zeigt einen beispielhaften zeitlichen Verlauf einer Netzfrequenz f_{Netz}. Dieser Verlauf ist ein Beispiel für ein Signal, das in das in Fig. 1 und 2 dargestellte System eingespeist wird. Die Netzfrequenz f_{Netz} ist in Fig. 3 als "zittrige Welle" dargestellt, die um die Nominal-Netzfrequenz von in Fig. 3 beispielhaft 50 Hz herum schwankt. Die Amplitude und der Verlauf der Netzfrequenz f_{Netz} ergibt sich aus der Summe aus eingespeister und entnommener Leistung in das bzw. aus dem Stromnetz. Ziel der (Frequenz-) Regelung, insbesondere der Primärregelung, ist es, diese Schwankungen auszugleichen, also aus der zittrigen Welle möglichst eine Gerade bei 50 Hz zu machen. Dies kann erreicht werden, wenn der zu der Schwankung der Netzfrequenz f_{Netz} führende Überschuss (bei zu hoher Netzfrequenz) bzw. Mangel (bei zu niedriger Netzfrequenz) von Leistung im Stromnetz durch zusätzliche Verbraucher/reduzierte Einspeisung von Leistung (bei zu hoher Netzfrequenz) bzw. Verringerung des Verbrauchs/erhöhte Einspeisung von Leistung (bei zu niedriger Netzfrequenz) kompensiert wird.

Fig. 4 zeigt einen beispielhaften zeitlichen Verlauf einer Frequenzabweichung Δf_{Netz}. Dieser Verlauf ist ein Beispiel für ein Signal, das aus der Einrichtung zur Erfassung der Frequenzabweichung Δf_{Netz} resultiert und anschließend in den Hochpass-Filter und/oder Tiefpass-Filter eingespeist werden kann, um spektral aufgeteilt zu werden. Die Frequenzabweichung Δf_{Netz} wird aus der gemessenen Netzfrequenz f_{Netz} ermittelt und ergibt sich aus der Differenz der Netzfrequenz f_{Netz} und der Nominal-Netzfrequenz von in diesem Beispiel 50 Hz. Dieser zeitliche Verlauf, der zwischen im vorliegenden Beispiel etwa -100 mHz und +100 mHz schwankt, ist zu kompensieren. Wie dem Diagramm aus Fig. 4 gut zu entnehmen ist, wird eine langsame Schwingung mit großer Amplitude von einer schnellen Schwingung mit kleiner Amplitude überlagert, was zu der zittrigen Welle führt. Ziel der Erfindung ist es, diese beiden spektralen Anteile der Welle voneinander zu trennen und separat zu kompensieren, um die Stärken der einzelnen verfügbaren technischen Einheiten zur Frequenzregelung gezielt nutzen zu können und damit insgesamt eine Effizienzsteigerung zu erreichen.

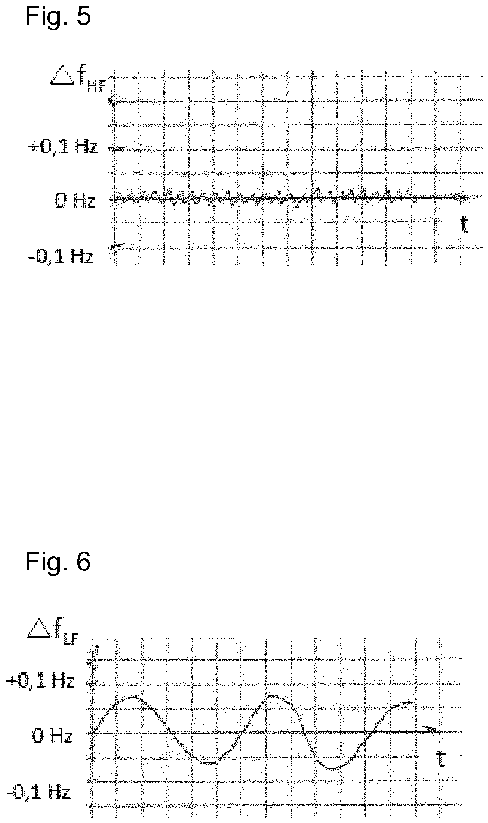

Fig. 5 zeigt einen hochfrequenten Spektralbereich des beispielhaften zeitlichen Verlaufs der Frequenzabweichung Δf_{Netz} aus Fig. 4. Dieses Signal ist ein Beispiel für einen aus dem Hochpass-Filter resultierenden Anteil des zeitlichen Verlaufs der Frequenzabweichung Δf_{Netz} im hochfrequenten Spektralbereich Δf_{HF}, der in die zweite technische Einheit eingespeist werden kann, um deren Leistungsanteil an der Regelleistung zu bestimmen.

Fig. 6 zeigt einen niederfrequenten Spektralbereich des beispielhaften zeitlichen Verlaufs der Frequenzabweichung aus Fig. 4. Dieses Signal ist ein Beispiel für einen aus dem Tiefpass-Filter resultierenden Anteil des zeitlichen Verlaufs der Frequenzabweichung Δf_{Netz} im niederfrequenten Spektralbereich Δf_{LF}, der in die erste technische Einheit eingespeist werden kann, um deren Leistungsanteil an der Regelleistung zu bestimmen. Der Residual-Anteil der Frequenzabweichung Δf_{Netz} gemäß der Ausführungsform aus Fig. 2 sieht genauso aus, wie dieser niederfrequente Spektralbereich Δf_{LF}.

Der Vergleich der Fig. 5 und 6 zeigt deutlich, dass eine spektrale Aufteilung der gesamten Frequenzabweichung in einen hochfrequenten Anteil und einen niederfrequenten Anteil die Möglichkeit eröffnet, hohe Regelungsleistung mit vergleichsweise langsamen Schwankungen bereitstellen zu können, was die Effizienz der Regelung massiv erhöht. Dies ist möglich, weil die schnellen Schwankungen der Frequenzabweichung, also der hochfrequente Anteil, nur eine kleine Regelungsleistung erfordert, also kleine Amplituden hat. Somit kann für die Kompensation der schnellen, kleinen Schwankungen eine schnelle aber schwache technische Einheit eingesetzt werden, während eine langsame aber starke technische Einheit die Kompensation der großen, langsamen Schwankungen übernehmen kann. Die Erkenntnis, dass diese Aufteilung des Signals in eine Aufteilung auf technische Einheiten abgebildet werden kann, ermöglicht es, eine besonders effiziente synthetische Regelleistung, insbesondere Primärregelleistung bereitzustellen. Die Erfindung kann, orientiert an einem ähnlichen Prinzip bei Mehrkanal-Lautsprecherboxen als "Mehrkanal-Primärregelleistung" bezeichnet werden.

## Patentansprüche

1. Verfahren zum Erbringen einer Regelleistung zum Regeln einer Netzfrequenz eines mit einer Nominal-Netzfrequenz betriebenen Stromnetzes bei einer Frequenzabweichung der Netzfrequenz von der Nominal-Netzfrequenz,
**dadurch gekennzeichnet, dass**
ein zeitlicher Verlauf der Frequenzabweichung spektral in zumindest zwei verschiedene Spektralbereiche aufgeteilt wird,
wobei jeder der Spektralbereiche jeweils einer von zumindest zwei verschiedenen technischen Einheiten zum Bereitstellen von Regelleistung zugeordnet ist, und
dass die erforderliche Regelleistung entsprechend der spektralen Aufteilung des zeitlichen Verlaufs der Frequenzabweichung einzeln oder gemeinsam durch die technischen Einheiten erbracht wird,
wobei ein jeweiliger Leistungsanteil der technischen Einheiten an der Regelleistung dem Spektralanteil desjenigen Spektralbereichs am zeitlichen Verlauf der Frequenzabweichung entspricht, welcher der jeweiligen technischen Einheit zugeordnet ist.

2. Verfahren nach Anspruch 1, wobei der zeitliche Verlauf der Frequenzabweichung
in einen Hochpass-Anteil und einen Residual-Anteil aufgeteilt wird oder
in einen Tiefpass-Anteil und einen Residual-Anteil aufgeteilt wird oder
in einen Hochpass-Anteil und einen Tiefpass-Anteil aufgeteilt wird.

3. Verfahren nach einem der vorhergehenden Ansprüche, wobei von den zumindest zwei technischen Einheiten
eine einem ersten Spektralbereich zugeordnete erste technische Einheit eine erste Reaktionsgeschwindigkeit und eine erste Energieverschiebekapazität oder Speicherkapazität aufweist,
eine einem zweiten Spektralbereich zugeordnete zweite technische Einheit eine zweite Reaktionsgeschwindigkeit und eine zweite Energieverschiebekapazität oder Speicherkapazität aufweist,
wobei der erste Spektralbereich eine langsamere Frequenzabweichung als der zweite Spektralbereich abdeckt und
wobei die erste technische Einheit eine geringere Reaktionsgeschwindigkeit und eine höhere Energieverschiebekapazität oder Speicherkapazität als die zweite technische Einheit aufweist.

4. Verfahren nach einem der vorhergehenden Ansprüche, wobei die Regelleistung zur Primärregelung des Stromnetzes erbracht wird.

5. System zum Erbringen einer Regelleistung zum Regeln einer Netzfrequenz eines mit einer Nominal-Netzfrequenz betriebenen Stromnetzes bei einer Frequenzabweichung der Netzfrequenz von der Nominal-Netzfrequenz,
wobei das System zumindest zwei verschiedene technische Einheiten zum Bereitstellen von Regelleistung umfasst,
**dadurch gekennzeichnet, dass**
das System eine Steuerung umfasst, die dazu ausgestaltet ist, die technischen Einheiten auf der Grundlage einer spektralen Aufteilung eines zeitlichen Verlaufs der Frequenzabweichung in zumindest zwei verschiedene Spektralbereiche zum Bereitstellen eines jeweiligen Leistungsanteils der Regelleistung derart anzusteuern, dass sich die Leistungsanteile der technischen Einheiten zur Regelleistung ergänzen.

6. System nach Anspruch 5, wobei die Steuerung dazu ausgestaltet ist, das Verfahren nach einem der Ansprüche 1 bis 4 durchzuführen.

7. System nach Anspruch 5 oder 6, wobei von den zumindest zwei technischen Einheiten
eine erste technische Einheit eine erste Reaktionsgeschwindigkeit und eine erste Energieverschiebekapazität oder Speicherkapazität aufweist,
eine zweite technische Einheit eine zweite Reaktionsgeschwindigkeit und eine zweite Energieverschiebekapazität oder Speicherkapazität aufweist, und
wobei die erste technische Einheit eine geringere Reaktionsgeschwindigkeit und eine höhere Energieverschiebekapazität oder Speicherkapazität als die zweite technische Einheit aufweist,
insbesondere wobei die erste technische Einheit ein verfahrenstechnischer Prozess wie beispielsweise ein Aluminiumelektrolyseprozess ist,
insbesondere wobei die zweite technische Einheit ein Superkondensator, Schwungradspeicher oder eine Batterie ist.

8. Stromnetz mit einer Nominal-Netzfrequenz und einer hiervon um eine Frequenzabweichung abweichenden Netzfrequenz,
**dadurch gekennzeichnet, dass**
das Stromnetz mit einem System nach einem der Ansprüche 5 bis 7 wirkverbunden ist.
